# EUROPEAN PATENT APPLICATION

(11) **EP 0 553 980 A2**
(43) Date of publication of application: **04.08.1993**
(21) Application number: 93300323.8
(22) Date of filing: 19.01.1993
(51) Int. Cl.: G11B 20/12, G11B 20/18, G11B 27/00, H04N 5/783, H04N 5/926, G11B 27/30

(54) **Method for magnetic recording and reproducing of video signals**

(30) Priority: 27.01.1992 JP 11647/92; 30.01.1992 JP 14546/92
(71) Applicant: MATSUSHITA ELECTRIC INDUSTRIAL CO., LTD., Kadoma-shi, Osaka-fu, 571 (JP)
(72) Inventor: Ide, Akifumi, Kawanishi-shi, Hyogo-ken, 666-01 (JP)
(74) Representative: Crawford, Andrew Birkby

(57) **Abstract**

In a method for magnetic recording and reproducing of video signals forming tracks with at least video sectors containing video information, audio sectors containing audio information, and index sectors containing index information, 1) the sync block length (73) of index sector (74) is set shorter than the sync block length (72) of video sector (70) or audio sector, and 2) the recording position of the index sector on the track is changed in every specific track. Hence, even in high speed reproduction, the index information can be reproduced, and the durability of scratch on the magnetic tape in the longitudinal direction is enhanced.

## Description

### Background of the Invention

### 1. Field of the Invention

The present invention relates to a magnetic recording and reproducing method, and more particularly to a method for recording and reproducing capable of recording and reproducing index information in addition to video signals and audio signals.

### 2. Description of the Prior Art

Video recorders using magnetic tapes as recording medium, especially home use VTRs (hereinafter called VTRs), have been rapidly and widely spread recently. At the present, small and lightweight VTRs with lots of functions have been developed.

Henceforth, the demand for higher image quality is expected to be intensified further. As means of such approach, the VTRs of digital processing and digital recording (hereinafter called DVTRs) are widely studied.

In such DVTRs, tracks are formed on a magnetic tape, and the video information forms video sectors, while the audio information forms audio sectors. Generally, from the viewpoint of editing function and others, the audio sectors and video sectors are separated from each other.

On the other hand, for the VTRs, not only normal play, but also trick plays, such as slow reproduction and fast feed reproduction are indispensable functions. Furthermore, the function of searching a desired position at high speed (hereinafter called "high speed search") is very important. In addition, in the DVTR, it is also considered to introduce a function of recording and reproducing other information, not limited to mere recording and reproducing of video signals and audio signals only, by making use of the features of digital recording.

In the high speed search, since the magnetic tape runs at a different speed than in the normal play, the magnetic head cannot trace the tracks correctly on the magnetic tape. Still more,when the search speed becomes considerably high, the data burst length becomes very short, and the utility efficiency of the reproduced data is extremely lowered substantially.

### Summary of the Invention

It is hence a primary object of the invention to solve the above problems and to enable reproduction of necessary information even in high speed search or the like. To achieve the above object, the invention presents a method for magnetic recording and reproducing of video signals forming tracks with at least video sectors containing video information, audio sectors containing audio information, and index sectors containing index information, wherein
(1) a sync block length of a sync block composing the index sector is shorter than a sync block length of a sync block composing the video sector in the track or the sync block length of a sync block composing the audio sector in the track,
(2) the video sector is composed of video information and video index information about the video information, and the audio sector is composed of audio information and audio index information about the audio information,
(3) a recording position on the track of the index sector and a recording position on the track of the audio sector in (1) is changed over at intervals of a specific number of tracks, and
(4) a sector length of the index sector and a sector length of the audio sector are equal to each other in (3).

### Brief Description of the Drawings

Fig. 1 is a block diagram showing a first embodiment of the invention.

Fig. 2 is a block diagram showing a constitutional example of recording side in the first embodiment shown in Fig. 1.

Fig. 3 is a block diagram showing a constitutional example of reproducing side in the first embodiment shown in Fig. 1.

Fig. 4 is a schematic diagram showing a recording pattern in the first embodiment.

Fig. 5 is a schematic diagram showing each sync block in the first embodiment.

Fig. 6 is a block diagram showing a second embodiment of the invention.

Fig. 7 is a block diagram showing a third embodiment of the invention.

Fig. 8 is a schematic diagram showing a recording pattern in the third embodiment.

### Description of the Preferred Embodiments

Referring now to the drawings, some preferred embodiments of the invention are described in detail below.

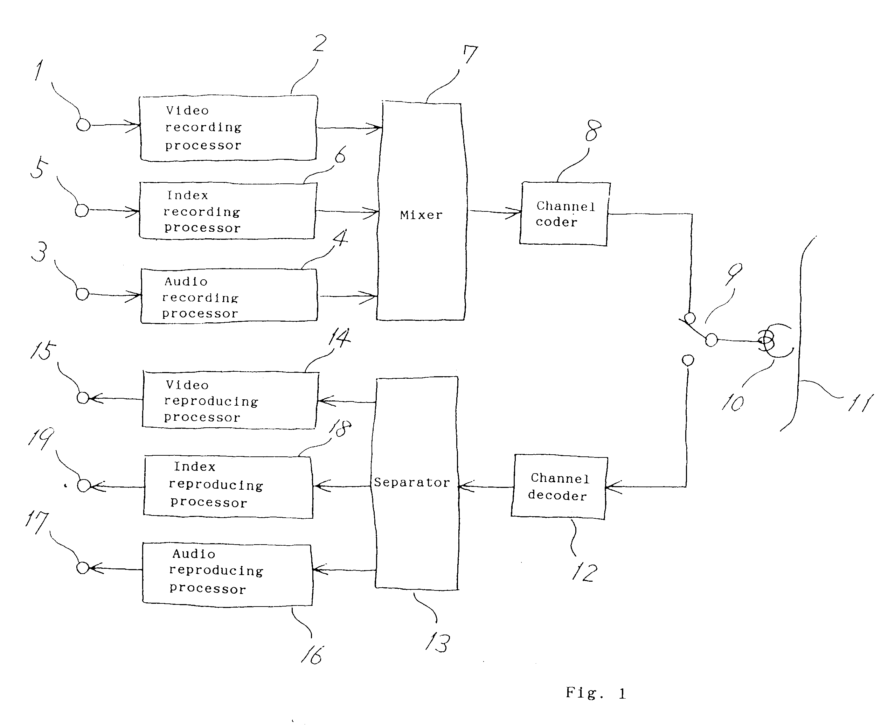

Fig. 1 is a block diagram showing a first embodiment of the invention. In the diagram, numeral 1 is a video input terminal, 2 is a video recording processor, 3 is an audio input terminal, 4 is an audio recording processor, 5 is an index input terminal, 6 is an index recording processor, 7 is a mixer, 8 is a channel coder, 9 is a change-over switch, 10 is a magnetic head, 11 is a magnetic tape, 12 is a channel decoder, 13 is a separator, 14 is a video reproducing processor, 16 is an audio reproducing processor, 18 is an index reproducing processor, 15 is a video output terminal, 17 is an audio output terminal, and 19 is an index output terminal. A video signal to be recorded is applied to the video recording processor 2 through the video input terminal 1. Specific signal processing is done in the video recording processor 2. On the other hand, the audio signal to be recorded is applied to the audio recording processor 4 through the audio input terminal 3. Specified signal processing is done in the audio recording processor 4. The index signal applied through the index input terminal 5 is applied to the index recording processor 6. The index is processed as specified in the index recording processor 6. The output of the index recording processor 6, the output of the video recording processor 2, and the output of the audio recording processor 4 are mixed in the mixer 7, and then digitally modulated in the channel coder 8. After digital modulated signal is fed to one input terminal of the switch 9. In recording, the switch 9 is closed to the output side of the channel coder 8, and the digital modulated signal is recorded on the magnetic tape 11 through the magnetic head 10 mounted on a rotary cylinder. In reproducing,the signal recorded on the magnetic tape 11 is taken out through the magnetic head 10. The switch 9 is closed to the channel decoder 12 side, and the signal from the head 10 is digitally demodulated in the channel decoder 12. The demodulated signal is separated in the separator 13 to the video information which is sent to the video reproducing processor 14, audio information which is sent to the audio reproducing processor 16, and index information which is sent to the index reproducing processor 18.

In the video reproducing processor 14, audio reproducing processor 16 and index reproducing processor 18, reverse processings to the recording processings are executed respectively. A reproduced video signal is obtained through the video output terminal 15 as the output of the video reproducing processor 14. A reproduced audio signal is obtained through the audio output terminal 17 as the output of the audio reproducing processor 16. A reproduced index signal is obtained through the index output terminal 19 as the output of the index reproducing processor 18.

The index signal herein includes the video signal system (525/60 system, 625/50 system, HD signal, MUSE system, ED-TV system, MAC system, etc.), the video signal form (composite signal, component signal, etc.), sampling frequency, type of bit rate reduction, sampling frequency of audio signal, type of bit rate reduction, number of audio channels, number of quantized bits, synchronous or asynchronous mode, time code, header code that indicates a start point of a program, identification of shooter, title, and other character information.

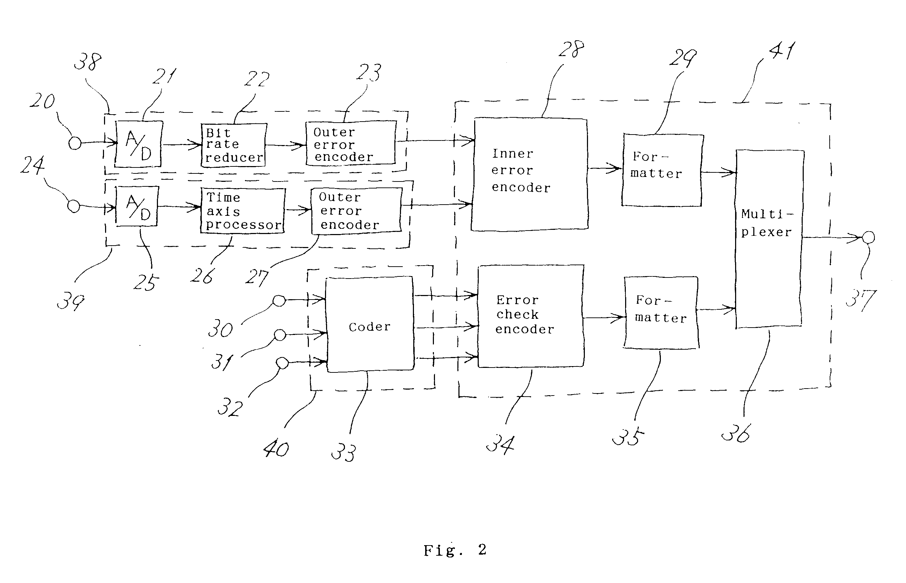

Constitutional examples of video recording processor 2, audio recording processor 4, index recording processor 6, and mixer 7 in Fig. 1 are shown in Fig. 2.

In Fig. 2, numerals 21 and 25 are A/D (analog-to-digital) converters, 20 is a video input terminal, 22 is a bit rate reducer, 23 and 27 are outer error encoders, 24 is an audio input terminal, 26 is a time axis processor, 30 to 32 are index input terminals, 33 is a coder, 28 is an inner error encoder, 34 is an error check encoder, 29 and 35 are formatters, 36 is a multiplexer, 38 is the video recording processor 2 in Fig. 1, 39 is the audio recording processor 4 in Fig. 1, 40 is the index recording processor 6 in Fig. 1, and 41 is the mixer 7 in Fig. 1.

The video recording processor 38 is composed of the A/D converter 21, bit rate reducer 22 and outer error encoder 23. The audio recording processor 39 is composed the A/D converter 25, time axis processor 26 and outer error encoder 27. The index recording processor 40 is composed of the coder 33. The mixer 41 is composed of the inner error encoder 28, error check encoder 34, formatters 29 and 35, and multiplexer 36.

The video signal to be recorded is converted into digital data in the A/D converter 21, and is led into the outer error encoder 23 after the data quantity is curtailed in the bit rate reducer 22. After first error correction encoding in the outer error encoder 23, the signal is fed to the inner error encoder 28. The audio signal to be recorded is converted into digital data in the A/D converter 25, and is led into the outer error encoder 27 after specified time axis processing in the time axis processor 26. After first error correction encoding in the outer error encoder 27, the signal is fed to the inner error encoder 28. The index information entered through index input terminals 30 to 32 is coded in the coder 33, and further encoded in the error check encoder 34 for multiplexing and error checking. The outputs of the inner error encoder 28 and error check encoder 34 are formatted in the formatters 29 and 35, and are multiplexed in the multiplexer 36.

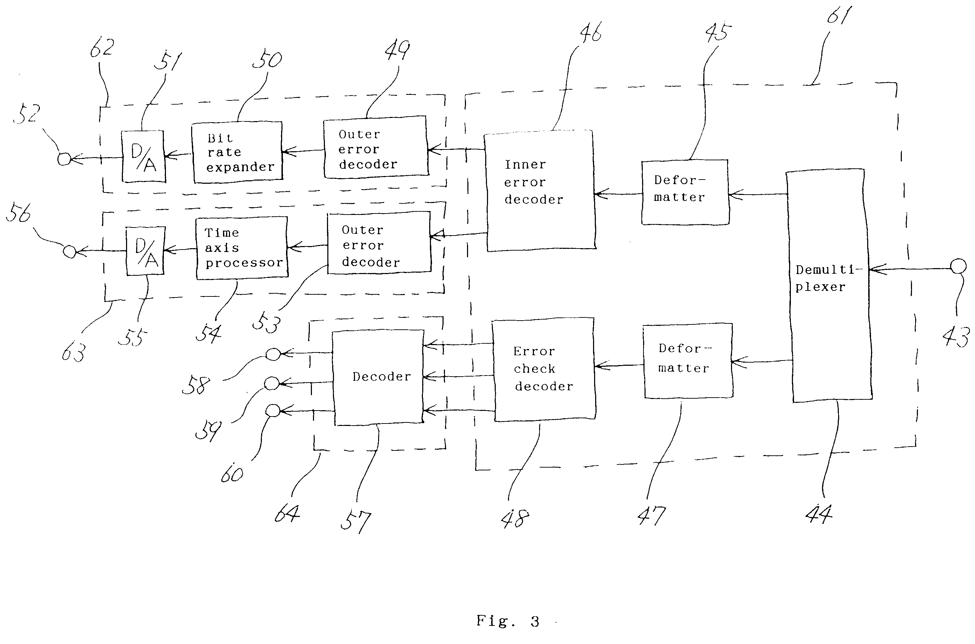

Constitutional examples of video reproducing processor 14, audio reproducing processor 16, index reproducing processor 18, and separator 13 in Fig. 1 are shown in Fig. 3.

In Fig. 3, numerals 51 and 55 are each a D/A (digital-to-analog) converter, 52 is a video output terminal, 50 is a bit rate expander, 49 and 53 are outer error decoders, 56 is an audio output terminal, 54 is a time axis processor, 58 to 60 are index output terminals, 57 is a decoder, 46 is an inner error decoder, 48 is an error check decoder, 45 and 47 are deformatters, 44 is a demultiplexer, 62 is the video reproducing processor 14 in Fig. 1, 63 is the audio reproducing processor 16 in Fig. 1, 64 is the index reproducing processor 18 in Fig. 1, and 61 is the separator 13 in Fig. 1. The output of the channel decoder 12 in Fig. 1 is separated into two series by the demultiplexer 44, and entered in the deformatters 45 and 47. The video and audio data string is deformatted in the deformatter 45, and is fed into the outer error decoders 49 and 53 after inner error correction by the inner error decoder 46. The outer error decoder 49 corrects the remaining error of video information, while the outer error decoder 53 corrects the remaining error of audio signal. The outputs of the outer error decoders 49 and 53 are fed to the bit rate expander 50 and time axis processor 54, respectively. By reverse processing to bit rate reduction in the bit rate expander 50, the video signal is returned to the analog signal in the D/A converter 51, and is picked up through the video output terminal 52. By reverse processing to time axis processor 26 in the time axis processor 54, the audio signal is returned to the analog signal in the D/A converter 55, and is picked up through the audio output terminal 56. In the deformatter 47, the index information data string is deformatted, and is fed into the decoder 57 after detection of presence or absence of error in the error check decoder 48. The decoder 57 decodes the input data, which is picked up through the index output terminals 58 to 60.

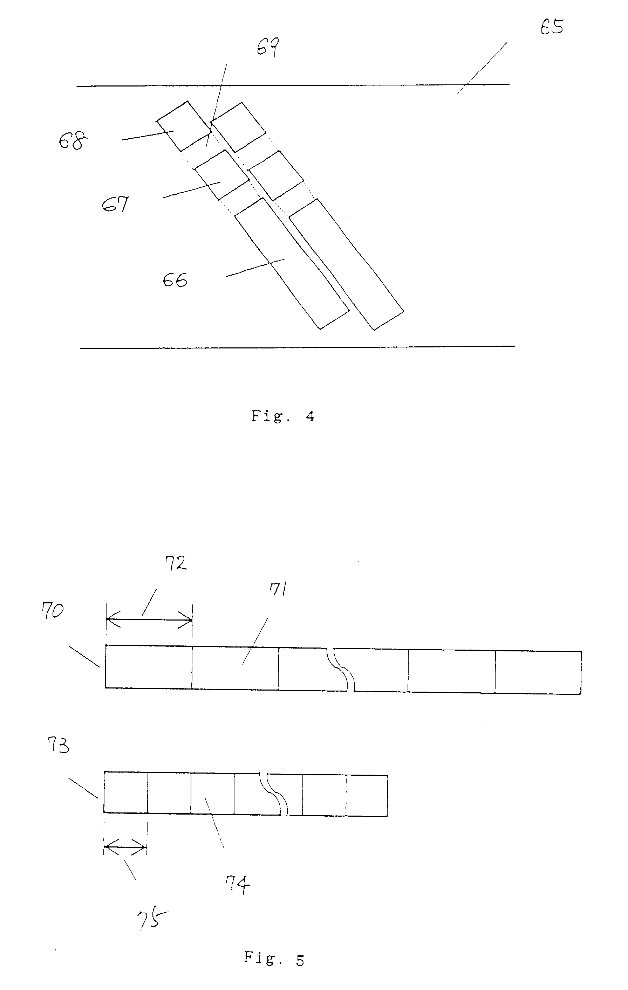

The recording pattern in the embodiment of the invention shown in Fig. 1 is shown in Fig. 4.

In Fig. 4, numeral 65 is a magnetic tape, 66 is a video sector, 67 is an audio sector, 68 is an index sector, and 69 is a track. Recording is made by forming the track 69 on the magnetic tape 11 by the magnetic head 10 in Fig. 1. The information about video signal created in the video recording processor 2 composes the video sector 66, and the information about audio signal created in the audio recording processor 4 composes the audio sector 67. On the other hand, the index signal composes the index sector 68.

Each sector on the track is explained below by reference to Fig. 5. Fig. 5 is a diagram showing each sector formed in the embodiment shown in Fig. 1 through Fig. 4, in which numeral 70 is a video sector (corresponding to the video sector 66 in Fig. 4), 71 is a sync block of video sector 70, 72 is a sync block length of video sector 70, 73 is an index sector (corresponding to the index sector 68 in Fig. 4), 74 is a sync block of index sector 73, and 75 is a sync block length of index sector 73. In high speed play, in order to restore the information of the index sector 73, the sync block length 75 of the index sector 73 is set shorter than the sync block length 72 of the video sector 70. Therefore, in high speed play (high speed search), if the envelopes produced from the magnetic head 10 are contiguous short bursts, the data can be restored in the unit of sync blocks 74.

Although not shown in Fig. 5, it is convenient when the sync block length of the audio sector is set nearly the same as the sync block length of the video sector.

A second embodiment of the invention is described below together with accompanying drawing.

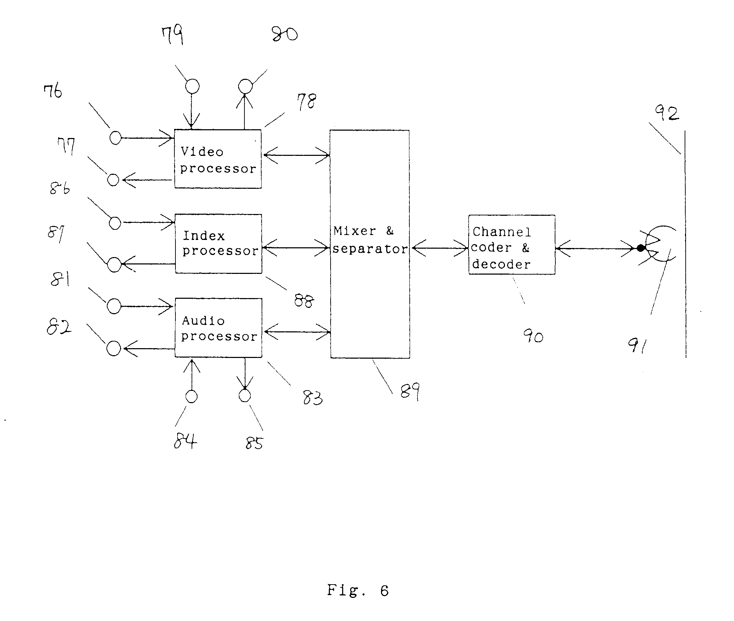

Fig. 6 is a block diagram showing a second embodiment of the invention. In the drawing, numeral 76 is a video input terminal, 77 is a video output terminal, 78 is a video processor, 79 is a video index input terminal, 80 is a video index output terminal, 81 is an audio input terminal, 82 is an audio output terminal, 84 is an audio index input terminal, 85 is an audio index output terminal, 83 is an audio processor, 86 is an index input terminal, 87 is an index output terminal, 88 is an index processor, 89 is a mixer & separator, 90 is a channel encoder & decoder, 91 is a magnetic head, and 92 is a magnetic tape. This embodiment is realized by adding the input and output of video index and input and output of audio index to the embodiment of the invention shown in Fig. 1, and the rest part is the same as the construction in Fig. 1. In Fig. 6, therefore, for the sake of simplicity, the recording system and reproducing system are shown in a uniform block composition. The video signal to be recorded is applied to the video processor 78 through the video input terminal 76. In the video processor 78, in addition to the action in Fig. 1, mixing of the video signal with the input video index inputted through the video index input terminal 79 is executed. On the other hand, the audio signal to be recorded is applied to the audio processor 83 through the audio input terminal 81. In the audio processor 83, in addition to the action in Fig. 1, mixing of the audio signal with the input audio index inputted through the audio index input terminal 84 is executed. The index information is applied through the index input terminal 86 to the index processor 88. In the index processor 88, the same operation as in Fig. 1 is executed on the index signal applied through the index input terminal 86. The output of the index processor 88, the output of the video processor 78, and the output of the audio processor 83 are mixed in the mixer & separator 89, and digitally modulated in the channel encoder & decoder 90. After digital modulation, the modulated signal is recorded on the magnetic tape 92 through the magnetic head 91 mounted on the rotary cylinder. When reproducing, the signal recorded on the magnetic tape 92 is taken out through the magnetic head 91, and is supplied to the channel encoder & decoder 90. After digital demodulation in the channel encoder & decoder 90, the demodulated data is separated in the mixer & separator 89 to the video information which is sent to the video processor 78, the audio information which is sent to the audio processor 83, and the index signal which is sent to the index processor 88. In the video processor 78, reverse processing to the recording processing is executed in the same way as in Fig. 1. In the audio processor 83, too, reverse processing to the recording processing is executed in the same way as in Fig. 1. In the index processor 88, too, reverse processing to the recording processing is executed in the same way as in Fig. 1. A reproduced video signal is obtained through the video output terminal 77 as the output of the video processor 78, and a video index signal through the video index output terminal 80. A reproduced audio signal is obtained through the audio output terminal 82 as the output of the audio processor 83, and an audio index signal through the audio index output terminal 85. Furthermore, the output of the index processor 88 is obtained as an index signal through the index output terminal 87.

The data closely related to the video signal including, for example, the video signal system (525/60 system, 525/50 system, HD signal, MUSE system, ED-TV system, MAC system, etc.), video signal type (composite signal or component signal), sampling frequency, and type of bit rate reduction, are entered and sent out through the video index input terminal 79 and video index output terminal 80 as video indices. The data closely related to the audio signal including, for example, the sampling frequency, type of bit rate reduction, number of channels, number of quantized bits, and synchronous or asynchronous classification, are entered and sent out through the audio index input terminal 84 and audio index output terminal 85 as audio indices. In this way, in the normal play or the trick play relatively close to normal play, such video indices and audio indices can be reproduced. On the other hand, in reproduction of very fast speed as compared with the normal play (that is, high speed play), the information of video indices and audio indices cannot be restored, but the important data in such high speed play, such as time code, header code, identification of shooter, title, and various character information, are entered and sent out through the index input terminal 86 and index output terminal 87 as index signals. Thus, the information, such as time code, header code, identification of shooter, title and various character information can be reproduced at high speed.

The recording pattern in the embodiment of the invention shown in Fig. 6 is the same as in Fig. 4, and its explanation is omitted herein.

A third embodiment of the invention is explained below with reference to the drawings.

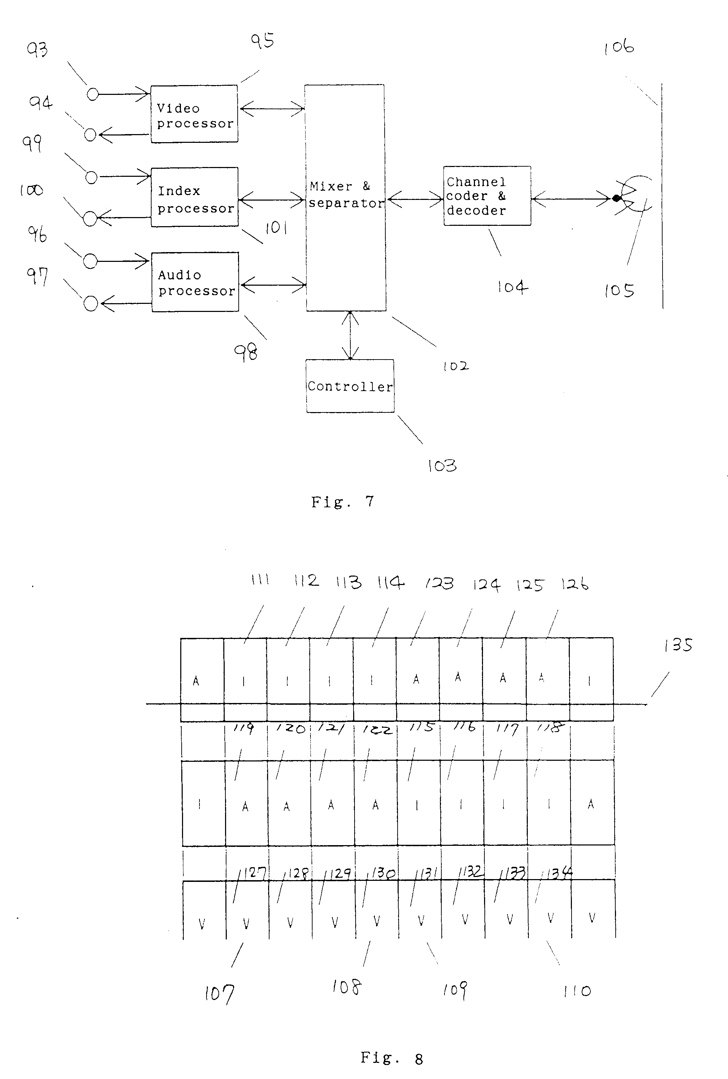

Fig. 7 is a block diagram showing the third embodiment of the invention. In the diagram, numeral 93 is a video input terminal, 94 is a video output terminal, 95 is a video processor, 96 is an audio input terminal, 97 is an audio output terminal, 98 is an audio processor, 99 is an index input terminal, 100 is an index input terminal, 101 is an index processor, 102 is a mixer & separator, 103 is a controller, 104 is a channel encoder & decoder, 105 is a magnetic head, and 106 is a magnetic tape. The video signal to be recorded is applied to the video processor 95 through the video input terminal 93. This embodiment, meanwhile, is realized by adding the control operation of the mixer & separator 102 by the controller 103, to the foregoing embodiment of the invention shown in Fig. 1, and the rest is the same as in the constitution in Fig. 1. Therefore, in Fig. 7, for the sake of simplicity, the recording system and reproducing system are shown in a uniform block composition. In the video processor 95, the video signal is processed in the same way as in Fig. 1. On the other hand, the audio signal to be recorded is applied to the audio processor 98 through the audio input terminal 96. In the audio processor 98, the same processing as in Fig. 1 is conducted. The index information is applied through the index input terminal 99 to the index processor 101. In the index processor 101, the applied index signal is processed in the same way as in Fig. 1. The output of the index processor 101, the output of the video processor 95, and the output of the audio processor 98 are mixed in the mixer & separator 102, and digitally modulated in the channel encoder & decoder 104. After digital modulation, the modulated signal is recorded on the magnetic tape 106 through the magnetic head 105 mounted on the rotary cylinder. In reproduction, the signal recorded on the magnetic tape 106 is taken out through the magnetic head 105, and supplied to the channel encoder & decoder 104. After digital demodulation in the channel encoder & decoder 104, the demodulated data is separated by the mixer & separator 102 to the video information which is sent to the video processor 95, the audio information which is sent to the audio processor 98, and the index signal which is sent to the index processor 101. In the video processor 95, reverse processing to the recording processing is done. A reproduced video signal is taken out through the video output terminal 94 as the output of the video processor 95. As the output of the audio processor 98, a reproduced audio signal is taken out through the audio output terminal 97. Furthermore, the output of the index processor 101 is taken out as index signal through the index output terminal 100.

Incidentally, the controller 103 controls the operation of the mixer & separator 102 in recording to control the position of the index sector on the track. In reproduction, as a matter of course, it controls the operation of the mixer & separator 102 to separate the data from the channel encoder & decoder 104 correctly.

The recording pattern in the embodiment of the invention shown in Fig. 7 is shown in Fig. 8.

In Fig. 8, numerals 127 to 134 are video sectors, 119 to 126 are audio sectors, 111 to 118 are index sectors, 107 to 110 are tracks, and 135 is a scratch formed on the magnetic tape in the longitudinal direction of the magnetic tape. For simplicity of explanation in Fig. 8, the actually slant tracks 107 to 110 are shown in a direction perpendicular to the longitudinal direction of the magnetic tape. The audio sectors 119 to 126 and the index sectors 111 to 118 are set in the same sector length. By the magnetic head 105 in Fig. 7, data is recorded by forming tracks 107 to 110 on the magnetic tape 106. Now, paying attention to, for example, tracks 107 to 108, the information concerning the video signal created in the video processor 95 composes video sectors 127 to 130 (indicated by "V" in the diagram), while the information about the audio signal created in the audio processor 98 composes audio sectors 119 to 122 (indicated by "A" in the diagram). On the other hand, the time code, header code, identification of shooter, title and other information mentioned above compose index sectors 111 to 114 (indicated by "I" in the diagram) as index signals.

Turning attention, then, to tracks 109 to 110, the information concerning video signal created in the video processor 95 composes video sectors 131 to 134 (indicated by "V" in the diagram), while the information concerning audio signal created in the audio processor 98 composes audio sectors 123 to 126 (indicated by "A" in the diagram). On the other hand, the time code, header code, identification of shooter, title and other information mentioned above compose index sectors 115 to 118 (indicated by "I" in the diagram) as index signals. The controller 103 controls the mixer & separator 102 so that the tracks 107 to 110 may form such data stream.

Explained next is a case when a scratch 135 is formed. The index sectors 111 to 114 on tracks 107 to 108 and the index sectors 115 to 118 on tracks 109 to 110 differ in the position on the tracks, and the index sectors 111 to 114 on tracks 107 to 108 are damaged by the scratch 135, while the index sectors 115 to 118 on tracks 109 to 110 are not. Therefore, even if the scratch 135 is formed in the longitudinal direction of the magnetic tape 106, the worst case of restoration failure of always the same index data is avoided. In addition, in the case of this embodiment, since the position on the tracks differs between the audio sectors 119 to 122 on tracks 107 to 108 and the audio sectors 123 to 126 on tracks 109 to 110, although the audio sectors 123 to 126 on tracks 109 to 110 are damaged by the scratch 135, the audio sectors 119 to 122 on tracks 107 to 109 are not. Therefore, for the audio information, too, the worst case of restoration failure of always the same audio data is avoided even if the scratch 135 is formed in the longitudinal direction of the magnetic tape 106.

In Fig. 7 and Fig. 8, nothing specific is described about time interval of the sector position for controlling the mixer & separator 102 by the controller 103, but, for example, the field unit or frame unit may be considered as the time interval.

It is not limited, incidentally, to exchange the positions of the index sectors 111 to 118 and audio sectors 119 to 126 as in Fig.8. In short, the position of the index sectors on the track is not fixed always at one place, but it is the concept of the third embodiment to vary the position at specific intervals.

That is to say, Fig. 8 shows an embodiment in which the index sector and the audio sector have a same sector length, but the effect of the invention is the same if the sector lengths are different.

The invention is hereby described by reference to embodiments.

According to the invention, the information such as time code and header code may be reproduced even in high speed reproduction.

Moreover, by containing the data closely related to the video signal in the video sector as video index and the data closely related to the audio signal in the audio sector as audio index, such video index and audio index can be reproduced in ordinary play or in trick play relatively close to ordinary play.

Still more, by shifting the recording position of the index sector on the track at intervals of a specific period, the durability to the scratch formed on the magnetic tape in the longitudinal direction of the magnetic tape may be enhanced.

## Claims

1. A method for magnetic recording and reproducing of video signals forming tracks with at least video sectors containing video information, audio sectors containing audio information, and index sector containing index information, wherein a sync block length of a sync block composing the index sector is shorter than a sync block length of a sync block composing the video sector in a track or a sync block length of a sync block composing the audio sector in the track.

2. A method according to claim 1, wherein the video sector is composed of video information and video index information about the video information, and the audio sector is composed of audio information and audio index information about the audio information.

3. A method according to claim 1, wherein a recording position on the track of the index sector and a recording position on the track of the audio sector is changed over at intervals of a specific number of tracks.

4. A method according to claim 3, wherein a sector length of the index sector and a sector length of the audio sector are equal to each other.
